Europäisches Patentamt

European Patent Office

Office européen des brevets

(19)

(11) Publication number: **0 089 792**

**A2**

(12) **EUROPEAN PATENT APPLICATION**

(21) Application number: **83301355.0**

(22) Date of filing: **11.03.83**

(51) Int. Cl.³: **F 02 P 5/04**

(30) Priority: **11.03.82 AU 3072/82**

(43) Date of publication of application:
**28.09.83 Bulletin 83/39**

(84) Designated Contracting States:
**AT BE CH DE FR GB IT LI LU NL SE**

(71) Applicant: **REPCO LIMITED**
**630, St. Kilda Road**
**Melbourne Victoria 3000(AU)**

(72) Inventor: **Aubert, Richard William**
**24 Heather Grove**
**Belgrave South 3160 Victoria(AU)**

(74) Representative: **Newstead, Michael John et al,**
**Haseltine Lake & Co. 28 Southampton Buildings**
**Chancery Lane**
**London, WC2A 1AT(GB)**

(54) **Ignition timing device.**

(57) Ignition timing circuitry for internal combustion engines operating on either liquid or gaseous fuels. The circuitry is arranged to modify a series of trigger pulses dependant upon the speed of the engine by delaying each pulse by a time delay determined by the circuitry which comprises a feed-forward circuit in the form of a tachometer and a feedback circuit actuated by an advance angle error detector.

FIG. 2.

EP 0 089 792 A2

IGNITION TIMING DEVICE

This invention relates to an ignition timing device and has been devised particularly though not solely for use in dual fuel engines capable of running on both liquid and gaseous fuels.

It is a well known fact than an internal combustion engine burning gaseous fuels performs better if its spark timing is modified in respect to the timing used for the same engine running on liquid fuels such as petrol. To achieve spark timing advance, switchable devices have been constructed in the past which allow selection of ignition advance characteristics depending on the fuel used in the engine. The ignition advance required for gaseous fuels has been achieved in the past by initially advancing the distributor or other spark impulse generating means to a position representing the maximum advance required and then electronically delaying the actual ignition point to that required. When liquid petrol fuel is in use a delay equal to the initial distributor advancement is introduced, that restores original spark timing. This approach has several disadvantages. The prior art method requires an accurate ignition advance meter to be used at installation and every time the distributor timing components are attended to during maintenance and does not allow the deletion of the retarding apparatus in case of failure of the system. If the retard system fails considerable damage may be done to the engine when running on petrol in an over advanced situation. Designs of this kind also tend to over advance the ignition at cranking speed and thus cause unsatisfactory starting on either or both modes of fueling.

It is therefore an object of the present invention to provide a method of and apparatus for generating spark actuating pulses in the ignition system of an internal combustion engine which will obviate or minimize the foregoing disadvantages in a simple yet effective manner or which will at least provide the public with a useful choice.

Accordingly in one aspect the invention consists in a method of generating spark actuating pulses in the ignition system of an internal combustion engine comprising the steps of generating a series of trigger pulses proportional to the speed of the engine and electronically delaying each said pulse by a time delay determined by an electronic circuit.

In a further aspect the invention consists in apparatus for generating spark actuating pulses in the ignition system of an internal combustion engine, comprising means adapted to generate a series of trigger pulses proportional to the speed of the engine and an electronic circuit arranged to delay each said trigger pulse by a predetermined time.

Preferably said electronic circuit incorporates a monostable oscillator circuit conditioned by a feed-forward circuit.

Preferably said feed-forward circuit includes a tachometer developing a voltage proportional to the trigger pulse frequency.

Preferably said trigger pulses are generated by known contact breaker points or their equivalent.

Notwithstanding any other forms that may fall within its scope one preferred form of the invention will now be described by way of example only with reference to the accompanying drawings in which:

Fig. 1 is a block circuit diagram of a conventional analogue method of solving the problem of generating a pulse wave form with a duty cycle which is a function of a command voltage but is relatively independent of speed,

Fig. 2 is a block circuit diagram of an improved pulse wave form generating circuit according to the invention, and

Fig. 3 is a circuit diagram of one practical embodiment of the invention.

In the preferred form of the invention advancing of the spark for use with gaseous type fuels such as liquid petroleum gas without interfering with the original setting of the distributor or other spark initiating means applicable to a liquid fuel such as petrol is achieved by initiating a spark not from the particular trigger pulse related to the cylinder about to be fired but by using a delayed pulse generated by the previous trigger pulse. Thus an increase in spark advance is generated by reducing the delay of the pulse in the system described. This concept although simple in principle is difficult to achieve in practice given the requirements of a practical system for use in a motor vehicle. The range of engine speeds may vary from 100 rpm at cranking to over 6,000 rpm at top speed. A range of 10 to 1 in delay time has to be maintained within close limits. of the order of 1% and under dynamic conditions of rapid changes of speed inherent in automotive engine applications.

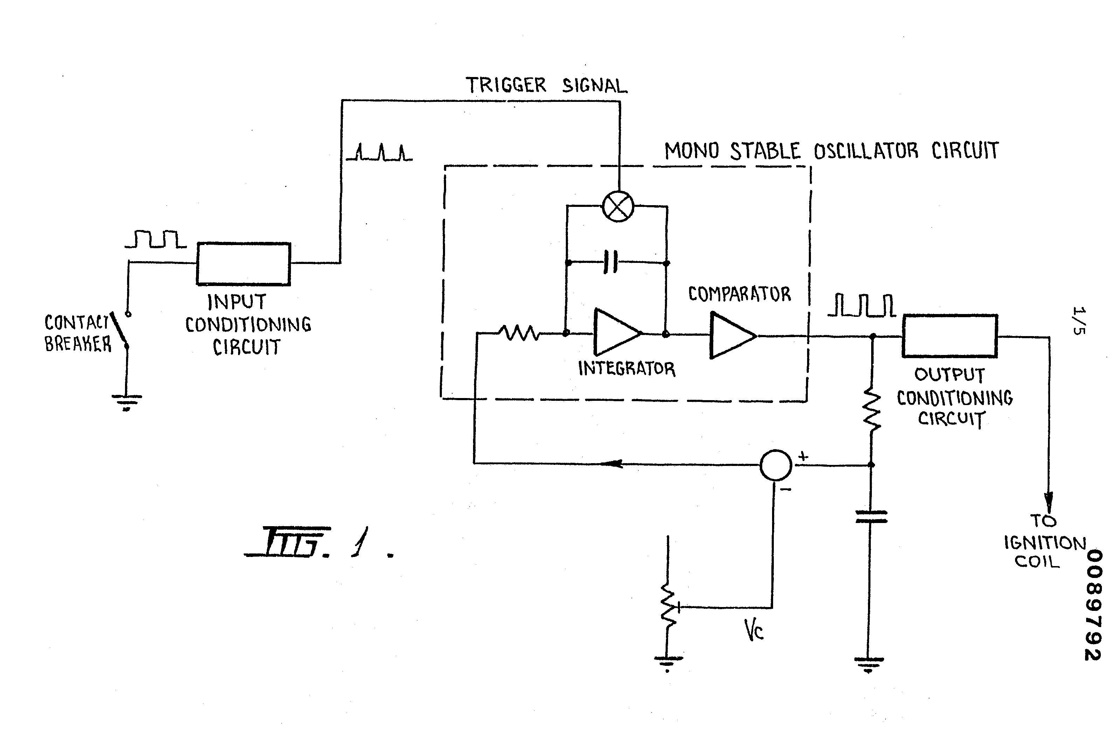

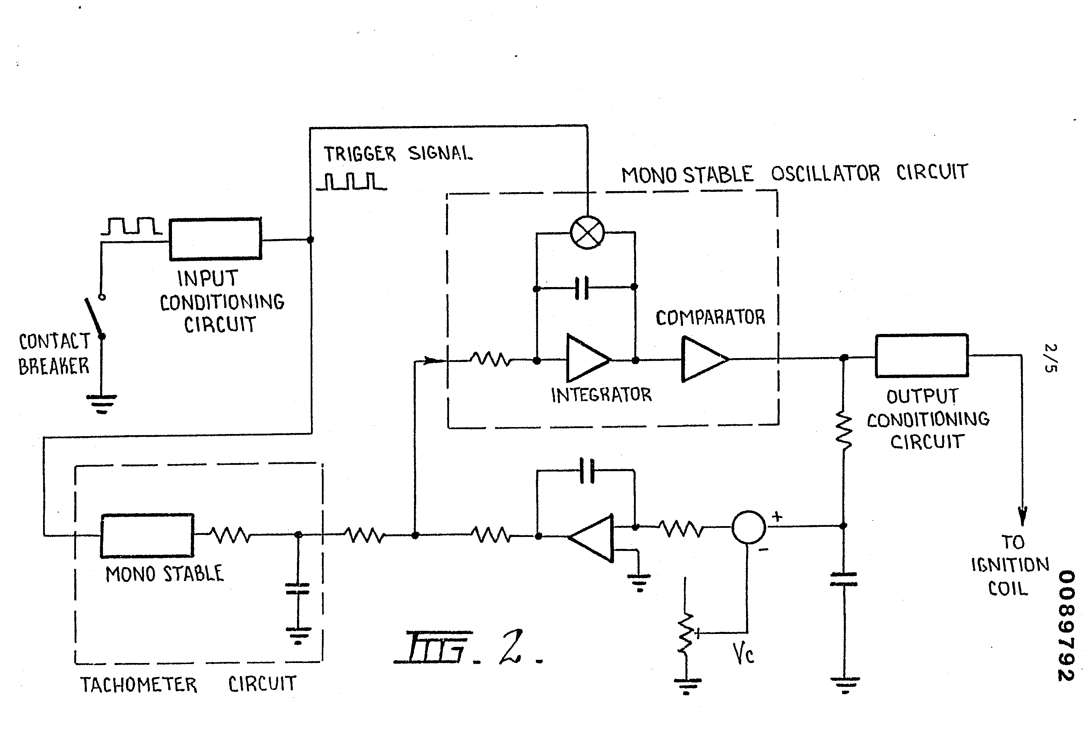

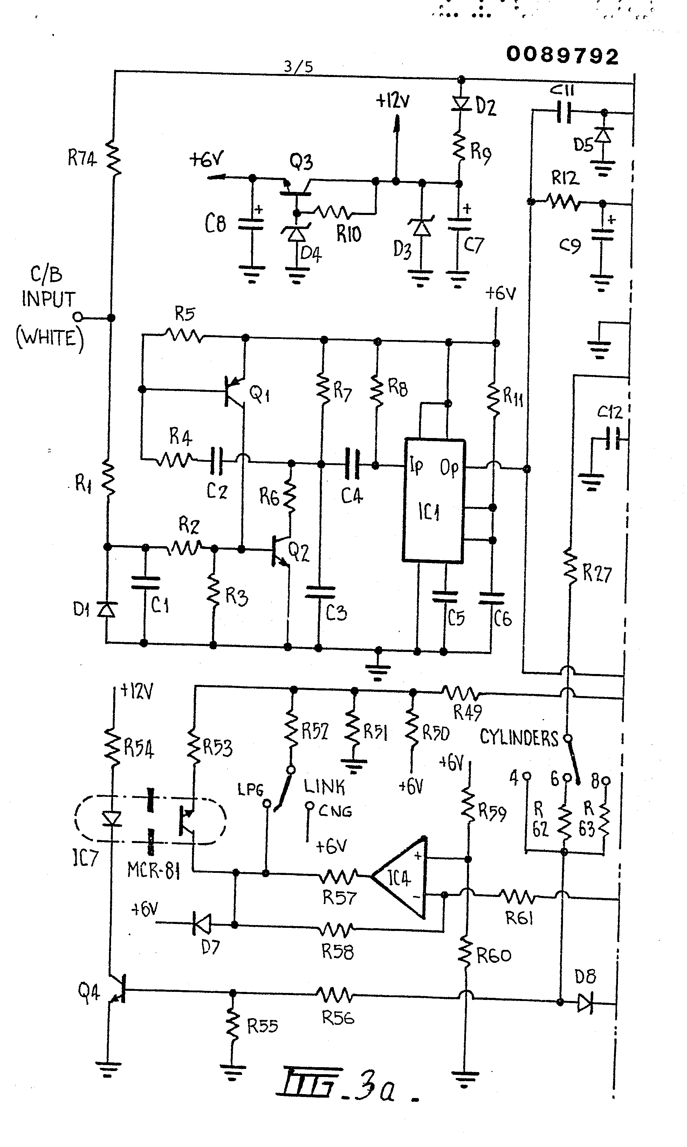

A conventional analogue method of solving the problem of generating a pulse wave form with a duty cycle which is a function of a command voltage that is relatively independent of speed is shown in Fig. 1. In this system conditioned pulses are used to trigger a monostable circuit with variable "on" time. The output is averaged into an R-C network which develops a potential proportional to the duty cycle. This potential is compared with the command voltage Vc, and differences between the two are amplified and used to control the "on" time of the multivibrator which will thus adjust to keep the duty cycle close to that selected by the command voltage over a range of operating frequencies.

It will be appreciated by those skilled in the art that in order to satisfy stability criteria in such a system loop gain has to be limited and time constants have to be long compared to the pulse period. This system is both slow and inaccurate and regardless of how complex the feed back circuit is made the criteria necessary to fulfil the function cannot be met.

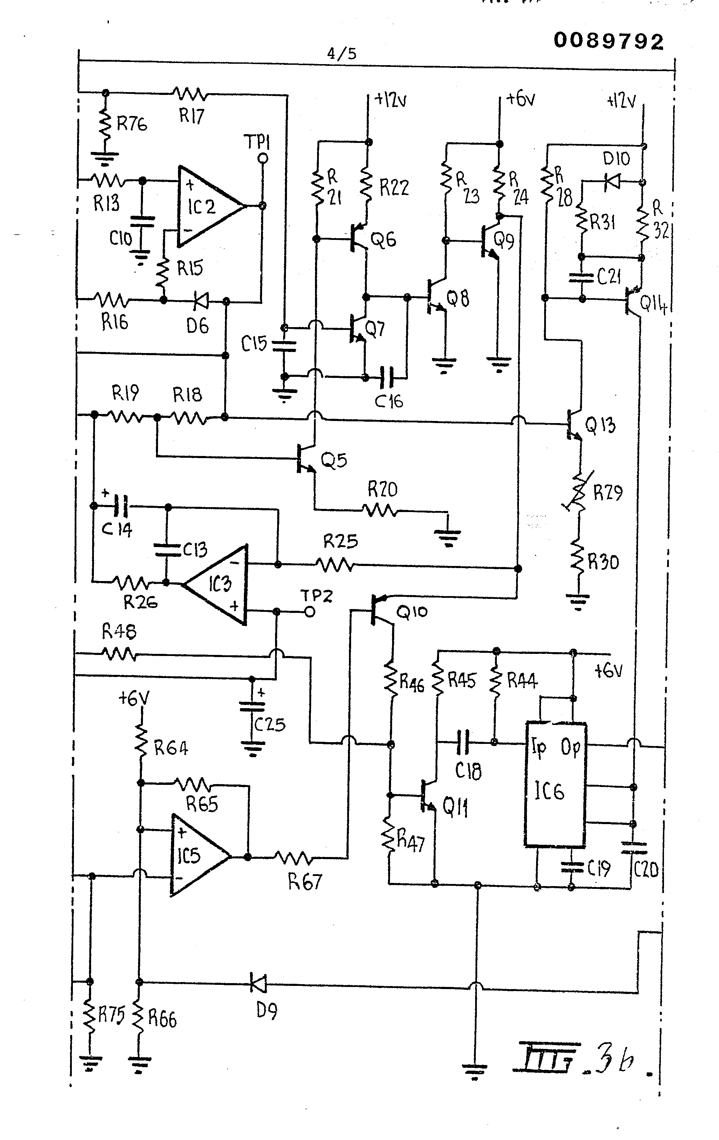

These problems are overcome in the preferred form of the invention as shown in Fig. 2 which resembles the circuit of Fig. 1 but adds a feed-forward circuit. This circuit includes a tachometer which develops a voltage proportional to frequency. Such circuits can be made to respond quickly as long as the accuracy required is not high. The monostable "on" period is of a length which is inversely proportional to the tachometer voltage and consequently the duty ratio of the monostable will remain substantially if not accurately constant when pulse frequency is varied. The command voltage in this circuit is compared with the actual duty ratio in an integrating comparator with very high D.C. loop gain and the resulting control voltage summed with the tachometer voltage controlling the monostable period. It will be seen that due to feed-forward control this circuit can be made to respond quickly if initially only with moderate accuracy to conditions of rapid engine speed changes. After reaching steady engine speed conditions V, delay time is controlled with great accuracy by means of the feedback circuit.

It can be seen that for running on liquid fuels such as petrol the control circuit is not required and is switched out of operation. This not only ensures fail-safe action but also allows normal ignition timing procedures to be used in maintenance.

It can further be seen that of time of cranking where advanced ignition is not desired the control circuit may be disabled to restore normal static timing thus achieving improved starting characteristics.

The command voltage required for controlling the advance unit can be generated in various known ways from the tachometer voltage. As a tachometer circuit is an essential part of any such control system regardless of whether or not it uses the circuits according to the invention it will be apparent that the circuit according to the invention is no more costly to manufacture than the prior art circuits which suffer from the drawbacks referred to above.

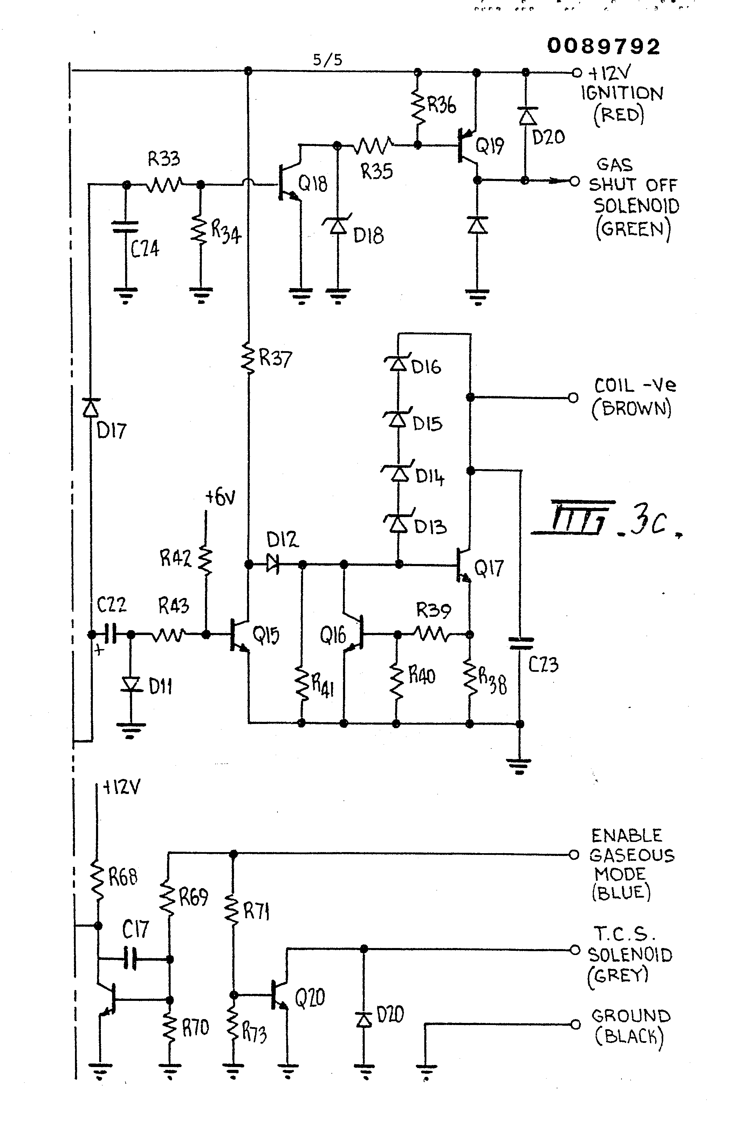

One particular practical embodiment of the invention will now be described in detail with particular reference to Fig. 3 which shows a circuit comprising the following features:

1. Power Supply

The power supply is of conventional design and consists of transistor Q3, diodes D2 to D4 and associated passive components. Its primary function is to remove fluctuations and high voltage transients from the incoming electrical supply source. In this particular application (motor vehicle using 12V negative ground system) it provides a +12 volt unregulated supply for the operational amplifiers and other supply tolerant circuitry, and an additional +6V regulated supply to the tachometer, advance timing, advance control and dwell control circuitry.

2. Trigger Signal Input Conditioning

The incoming trigger signal at the "C/B input" terminal is a square wave signal generated by conventional cam driven contact breakers or other electronic means such as an existing electronic ignition system. This signal is conditioned by the circuitry associated with transistors Q1 and Q2 so that multiple edges and/or impulse interference are not interpreted as eroneous input signals. This circuitry is connected as a mono-stable multivibrator with low-pass filters on both its input and output. The mono-stable oscillator when triggered by a long duration positive going trigger pulse undergoes an output transition in the negative direction that is coupled into the tachometer integrated circuit IC1 by the R.C. differentiator circuit (R8,C4).

### 3. Tachometer

The tachometer circuitry is of conventional design comprising a monostable multivibrator of fixed period followed by low-pass output filtering that produces an output voltage change proportional to trigger pulse rate (or engine speed).

In this application a proprietary integrated circuit timer IC1 (type LM555) is connected as a monostable oscillator. This monostable is followed by a two section low-pass filter comprising R12, R13, C9 and C10 that achieves a high degree of smoothing action simultaneously with rapid response to changes in engine speed. The high output impedance of this filter is buffered and D.C. level shifted by IC2 to produce the control signal for the advance and dwell control circuitry.

### 4. Timing Control Circuitry

The timing control circuitry is important to the operation of the invention and as previously stated relates to the combined use of feed-forward and feedback techniques around a timing circuit to achieve both accuracy and fast dynamic response.

Spark timing advance is achieved by introducing a delay between the input trigger pulse and spark initiating pulse of such time duration that the spark initiating pulse and thus ignition occurs earlier in the next engine ignition cycle.

The timing element in this practical embodiment is a variable analog delay circuit comprising a charge integrator, level comparator and reset circuit. The integrator comprises level shift transistor Q5 current mirror Q6 and integrating capacitor C16. It produces a positive going voltage ramp on C6 the rise rate of which is proportional to the potential across R20. During normal circuit operation the potential across

0089792

R20 is related to the potential on the base of transistor Q5 by this transistor's forward base emitter voltage characteristic (approx. 62V for silicon transistor).

The voltage on the base of Q5 thus determines the changing rate of the integrator capacitor C16 and this node is the summing node where the feed forward compensation signal from the tachometer circuit, and the feedback signal·from the advance angle error detector are summed by resistor R18 and R19 respectively.

The integrator is reset at the commencement of a timing cycle by transistor Q7 which is turned on momentarily at each tacho monostable operation by capacitor C11. Integrator output level is monitored by a high gain transistor amplifier consisting of transistors Q8 and Q9. In this circuit the amplifier performs a comparator function that results in a positive output transistion (collector transistor Q9) when the transistor Q8 commences conduction.

The time delay produced by this circuit is the time required for the integrating capacitor C16 to rise to the comparator threshold.

Circuit component values are proportioned so that the feedforward tacho voltage signal produces a time delay inversely proportional to speed, that is of such a magnitude that a mean value of advance is achieved and little feedback error correction is required.

Feedback error correction is performed by operational amplifier IC3 which is connected as a differencial integrator. This integrator compares the average D.C. value of the comparator output (which is proportional to advance cycle) with advance angle command voltage on the integrator non-inverting input (IC3 + input). The integrating components are C14 and R25, passive components R26, C13 and C12 are required for interference suppression and to improve high-frequency stability. The integrated advance angle error is fed back to the ramp-control summing node by R19.

The advanced timing signal present at the comparator output is gated by transistor Q10 and feed into Q11 by R46. A direct undelayed timing signal is also applied to Q11 via R48 so that in the absence of the advanced timing signal normal ignition operation continues. Gate transistor Q10 is open during the petrol mode of operation or during cranking when no advance is required. Transistor Q11 performs inversion and amplification necessary for triggering of the ignition coil dwell control monostable oscillator IC6 (type LM555).

5. Timing Command Circuitry

The circuitry associated with IC4, IC5, vacuum switch IC7, CNG/LPG and cylinder switching generates an advance angle command signal appropriate to application engine speed and load. This signal is averaged by R49 and C25 and applied to the non-inverting terminal of the differential integrator.

6. Additional Circuitry

Circuitry associated with Q13, Q14 and IC6 provide a speed dependent dwell characteristic.

Transistors Q15, Q16, Q17, Q18, Q19, Q20 and associated components provide conditioning and amplification for drive to the ignition coil and other peripheral control functions.

Whilst the invention has been described initially as consisting of proportional feed-forward control to maintain the duty cycle with changes in speed, in a further embodiment of the invention the amount of feed-forward may be deliberately used to tailor the system response curve under transient conditions. For instance by undercompensating for speed in the feed-forward circuit the pulse delay under acceleration conditions may be made longer by a low value of proportional feed-forward thereby producing ignition retardation. Under static conditions the integral feedback will produce the amount of delay time determined by the command voltage.

In this manner apparatus for generating spark actuating pulses in the ignition systems of dual fuel internal combustion engines is provided which will work in a fail safe manner which will not damage the engine on failure of the apparatus and which is much simpler to install and maintain and on average is more accurate in controlling the spark actuating pulses in the ignition.

1.    A method of generating spark actuating pulses in the ignition system of an internal combustion engine comprising the steps of generating a series of trigger pulses proportional to the speed of the engine and electronically delaying each said pulse by a time delay determined by an electronic circuit.

2.    Apparatus for generating spark actuating pulses in the ignition system of an internal combustion engine, comprising means adapted to generate a series of trigger pulses proportional to the speed of the engine and an electronic circuit arranged to delay each said trigger pulse by a predetermined time.

3.    Apparatus as claimed in claim 2 wherein said electronic circuit incorporates a monostable oscillator circuit conditioned by a feed-forward circuit.

4.    Apparatus as claimed in claim 3 wherein said feed-forward circuit includes a tachometer circuit developing a voltage proportional to the trigger pulse frequency.

5.    Apparatus as claimed in claim 3 wherein said electronic circuit further incorporates a feedback circuit from an advance angle error detector.

6.    Apparatus as claimed in claim 5 wherein said feedback circuit comprises an operational amplifier connected as a differential integrator.

7.    Apparatus for generating spark actuating pulses in the ignition system of an internal combustion engine, including means adapted to generate a series of trigger pulses proportional to the speed of the engine and the combined use of feed-forward and feedback electronic circuits arranged to delay each said trigger pulse by a predetermined time.

8.    Apparatus for controlling the timing of spark actuating pulses in the ignition system of an internal combustion engine when constructed, arranged and operable substantially as described herein with reference to Fig. 2 of the accompanying drawings.

9.    Apparatus for controlling the timing of spark actuating pulses in the ignition system of an internal combustion engine when constructed, arranged and operable substantially as described herein with reference to Fig. 3 of the  accompanying drawings.

TRIGGER SIGNAL

MONO STABLE OSCILLATOR CIRCUIT

COMPARATOR

INTEGRATOR

INPUT CONDITIONING CIRCUIT

CONTACT BREAKER

OUTPUT CONDITIONING CIRCUIT

TO IGNITION COIL

$V_c$

FIG. 1.

1/5

0089792

FIG. 2.

TRIGGER SIGNAL

MONO STABLE OSCILLATOR CIRCUIT

INPUT CONDITIONING CIRCUIT

CONTACT BREAKER

COMPARATOR

INTEGRATOR

OUTPUT CONDITIONING CIRCUIT

MONO STABLE

TACHOMETER CIRCUIT

TO IGNITION COIL

$V_c$

2/5

0089792

FIG. 3a.

0089792

0089792

FIG. 3c.